# EUROPEAN PATENT APPLICATION

(11) **EP 4 636 628 A1**
(43) Date of publication of application: **22.10.2025**
(21) Application number: 24171355.1
(22) Date of filing: 19.04.2024
(51) Int. Cl.: G06F 21/57, G06Q 10/063, H04L 9/40

(54) **INITIATING A SECURITY ACTION**

(71) Applicant: Siemens Aktiengesellschaft, 80333 München (DE)
(72) Inventor: Kröselberg, Dirk, 81541 München (DE); Limmer, Tobias, 85276 Pfaffenhofen a.d. Ilm (DE)
(74) Representative: Siemens Patent Attorneys

(57) **Abstract**

This invention relates to methods, security devices, computer programs and computer-readable storage media for initiating a security action for a component of an industrial system whereby the security action reduces or completely mitigates a vulnerability or a weak configuration of the component and/or of the industrial system, with the following steps:
- Providing a respective property information for one or several component properties of the component;
- Providing a risk information for a dedicated combination of the component property and risk category, whereby the risk information provides a risk of the property information of the component property in respect to the risk category;
- Determining a joint risk information for the risk category by generating a risk value based on one or more of the risk information associated to the risk category;
- Determining a component-based risk score based on the respective joint risk information of the several risk categories;
- initiating the security action if the component-based risk score indicates a required action.

## Description

This application relates to methods, security devices, computer programs and computer-readable storage media for initiating a security action for a component of an industrial system.

According to [1], "Industrial automation & control systems (IACS) often perform essential tasks in the operation of critical infrastructure. Examples include IACSs in public water management, production of pharmaceutical substances, or automation control in energy generation and distribution. Such systems are composed of different component types: Embedded devices like PLCs or lEDs, industrial PCs, and specific network devices. These are interconnected with a mixture of standard Internet protocols and industrial-domain communication protocols. Software is running on all these components: Firmware, operating systems, and applications for automation control tasks."

The document [1] further explains that "[t]he impact from attacks on an IACS depends on the purpose of the system, and can be disastrous. For example, a chemical process might have to be stopped and needs a very long time to be re-established. Attacks that change configurations could lead to physical damage of equipment. And if the system is controlling the distribution of electrical power, the impact might be a regional power outage.".

The risk of such attacks can be reduced or prevented by patching software and/or firmware that remove detected vulnerabilities. There are systems known that report such vulnerabilities for software, hardware and/or firmware components. According to [2], "The Common Vulnerabilities and Exposures (CVE) system provides a reference method for publicly known information-security vulnerabilities and exposures". Further on, "[t]he Common Vulnerability Scoring System (CVSS) is a free and open industry standard for assessing the severity of computer system security vulnerabilities. CVSS attempts to assign severity scores to vulnerabilities, allowing responders to prioritize responses and resources according to threat.", see [3]. By using CVE and CVSS e.g. vendors of such components inform about vulnerabilities of their components.

However, an actual risk from a vulnerability for a component within a system, such as an IACS, may be different from its CVSS score, because the CVSS score isn't system specific. According to [1] a first factor regarding system-specific risk is exposure, e.g. whether a component is accessible from a network with a low trust level, or even the Internet, and whether physical access is easy. A second factor regarding system-specific risk is a level of potential impact that depends on the purpose of the system, e.g. a critical infrastructure, such as a communication node of a central node or a power distribution station, or an insignificant system, such a control module of a refrigerator in a private household. This can be also applied to a component of a system, e.g. whether a failure of the component has a significant impact on at least a part of the system or shows a minor impact.

The solution presented in [1] uses a RBVR algorithm (RBVR - Risk Based Vulnerability Rating) that combines parts of the CVSS base score of a vulnerability with system-specific exposure and impact ratings. According to [1] "System-specific risk rating requires information about the system, in particular its zones, the software running on its components, and the network communication between these components. We use the system model approach of [1], which focuses on modeling the attack surface of a system. In addition, the information about the system that is required for rating exposure and impact is captured in a system risk image (SRI). The system model and the SRI together provide static input for our RBVR algorithm and have to be prepared manually by an analyst. The risk rating of an actual vulnerability is performed in an automated way by the RBVR algorithm."

According to [1], section I. "The system model and the SRI together provide static input for our RBVR algorithm and have to be prepared manually by an analyst.". This means that significant manual efforts are required to use the proposed RBVR algorithm. Hence for each new setup of a system or when the system changes dynamically over time, manual efforts have to be invested again.

Independent of the grammatical term usage, individuals with male, female or other gender identities are included within the term.

Hence an object of the present invention is to provide methods and systems that bridge the gap of prior-art to provide a risk rating in a more automated way.

This objective is solved by the independent claims. Alternatives are covered by dependent claims.

According to a first aspect of this invention a method is disclosed that initiates a security action for a component of an industrial system whereby the security action reduces or completely mitigates a vulnerability or a weak configuration of the component and/or of the industrial system, with the following steps:
- Providing a respective property information for one or several component properties of the component;
- Providing a risk information for a dedicated combination of the component property and risk category, whereby the risk information provides a risk of the property information of the component property in respect to the risk category;
- Determining a joint risk information for the risk category by generating a risk value based on one or more of the risk information associated to the risk category;
- Determining a component-based risk score based on the respective joint risk information of the several risk categories;
- Initiating the security action if the component-based risk score indicates a required action.

The invention shows the advantage that the degree of automation is significantly increased compared to known methods. In addition, also flexible industrial systems such as self-organizing systems can be supported with this invention because manual input isn't required for ongoing changes in the system. The invention allows to estimate the risk for a component based on its properties for given security scenarios that are called risk categories. By the joint analysis of the risk categories taking the specific properties of the component into account a joint risk vector with joint risk information of the risk categories can be generated. The joint risk information allows to analyze the risk whether a vulnerability, if exploited for example, has a low risk or a high risk to harm the component and/or system. The invention can be used for finding potential risk derived from erroneous or weak configuration of the component, e.g. open ports that allow an easy access to the component to manipulate confidential data. The joint risk information can also be combined with reported vulnerability information, e.g. based on the Common Vulnerability Scoring System (CVSS), in order to achieve whether the reported vulnerability shows a high or low risk to harm the component, e.g. by exploiting a server security vulnerability.

By using this inventive approach, the risk assessment for the component and/or system can be performed much faster, with less manual efforts over the component's lifetime and can be repeated arbitrarily often due to its automated execution. This improves to reduce the risk for harmful exploitation of vulnerabilities, because the change to detect high risks due to the increased frequency of execution of the assessment is improved.

Within this description, the term risk, risk value and risk information are understood as a kind of likelihood information that an item under consideration such as the component or a combination of the risk category and the component property is more or less likely to be harmed in case of an exploitation of a vulnerability. The probability information can range from 0.0 to 1.0 with 0.0 indicating no expected harm to 1.0 indicating a high probability of devastating harm. Other kind of probability representations are also understood as part of description such as textual descriptions for example low, medium and high risk, binary representations such as no expected or a high expected risk or any other kind of representation showing different strength of risk.

The term vulnerability can be understood as any means that harm the functionality, confidentiality, integrity and/or availability of the component or a part of the component or the effect from the component on other components or the system.

In another aspect of the invention, the component is realized by an individual component or by a zone. This shows the advantage that one method can be used to analyze the risk and derive actions to reduce or harm the vulnerability of the component independent whether it is an individual component or a zone. An individual component can be a piece of software or hardware, a procedure for controlling, monitoring or transmitting of data and/or other components. In contrast a zone is a logical area within a system which allows to have some identical or similar properties for the individual components. For example, the zone may have no direct connection to the internet. Hence all individual components within the zone have the same property "no direct internet connection".

The security action is to be understood as any action that reduces the risk of the component to be harmed by an exploited vulnerability. This can be a patch for a software or firmware, a change of a configuration such as closing a port or limiting a file size, or an activation of an encrypting functionality to save data encrypted in the memory.

The component consists of several component properties that can be used to describe the component is more detail. According to another aspect of the invention the component property describes a property of the component such as:
- Type of component, in particular represented by property information such as an embedded component, network component, security component, operating system component, software application or a container component;
- Functionality of component, in particular represented by property information such as controlling a process, monitoring a status of a process, controlling one or several components in the industrial system, running offline or real-time, being a primary or secondary component, or executing an essential or safety function;
- Location of component, in particular represented by property information showing a physical or geographical location within a production facility or plant, a remote lo-cation in respect to the industrial system;
- Topology of component, in particular represented by property information such as the component's level within the Purdue model;
- Data the component is working with, in particular represented by property information for the data that shows specific requirements in terms of confidentiality, integrity and/or availability.

With these component properties and its property information the component can be described in a standardized way. This reduces manual efforts for assignment and improves the automatic way of generating the risk of the component.

In another embodiment the component property describes several capabilities of the component such as:
- Is the component under security monitoring?
- Is the component patched or patchable?
- Is the component updated with a latest malware protection?
- Does the component require authentication?
- Is the component hardened?
whereby the initial risk value is determined by a start risk value that is reduced by a dedicated deduced risk value for each capability that is available within the component.

By this embodiment multiple capabilities that are available within a component influence one initial risk value. This reduces complexity to determine the joint risk information but improves the risk assessment because a large number of property information for determination. Finally this embodiment further improves the quality in the risk assessment to determine the joint risk information

In another embodiment of this invention the respective property information is provided by a description of the component and/or by scanning of one or more components of the industrial system, in particular by a network scanning and/or security scanning. This further automates the risk assessment. By this the determination of the risk of the component can be performed im higher frequency. In addition, this embodiment helps to detect changes in a configuration of the component and/or system in a much faster way than in the handling in prior-art. These two aspects further allows to reduce the risk to be attacked and to increase the error-free operation of the component and/or the system.

In a further advantageous embodiment of the invention at least parts of the respective property information are set up during the setup of the industrial system and/or is updated on either in given time intervals or after vulnerability information was received that relates to a respective component (COM) covering the respective property information. By this the determination of the risk of the component can be performed im higher frequency. In addition, this embodiment helps to detect changes in a configuration of the component and/or system in a much faster way than in the handling in prior-art. These two aspects further allow to reduce the risk to be attacked and to increase the error-free operation of the component and/or the system.

The risk category shows the risk for a given security context. The risk for the risk category depends on the selected component - in particular to the risk values that are assigned to at least some of the specific component properties. It can happen that specific component properties have no influence on a given risk category. The respective risk category can relate to the individual component and/or to the zone. Hence in a number of given security categories one or more specific security categories may not relate to the component the risk assessment is made.

According to another favorable embodiment the risk category describes at least one of the following security contexts:
- Exposure for a zone that groups one or more individual components;
- Exposure for an individual component;
- Security impact of a zone that groups one or more individual components;
- Security impact of an individual component;
- Exploitation estimate / Exploitability for a zone;
- Exploitation estimate / Exploitability for an individual component.

According to [1] exploitability means how challenging it is for an attacker to perform an attack, e.g. on / over a component, assuming they have the required level of access. According to [1] exposure means how easy it is for an attacker to get the level of access, e.g. on / over a component, that is required for the attack. Exposure can be a physical, local or network exposure Both exploitability and exposure represent risk as a likelihood. According to [1] impact means how much harm a successful exploitation of a vulnerability can establish for the component and / or the system. This embodiment shows the advantage that the risk to be determined uses well-known security contexts. These security contexts can be applied to all kinds of components and allows a low-complex automated processing of the determination of the risk.

According to another embodiment of the invention the risk category describes at least one of the following security contexts:
- Exposure for a zone that groups one or more individual components;
- Exposure for an individual component;
- Security impact of a zone that groups one or more individual components;
- Security impact of an individual component;
- System impact of a zone that groups one or more individual components;
- System impact of an individual component;
- Security impact on confidentiality of a zone that groups one or more individual components;
- Security impact on confidentiality of an individual component;
- Security impact on integrity of a zone that groups one or more individual components;
- Security impact on integrity of an individual component;
- Security impact on availability of a zone that groups one or more individual components;
- Security impact on availability of an individual component;
- Exploitation estimate / Exploitability for a zone;
- Exploitation estimate / Exploitability for an individual component.

These risk categories show the same advantages as discussed with the previous embodiment. However, the security contexts regarding security impact are more detailed and allow therefore a more detailed analysis of the risk of the component.

In a further embodiment the provision of the risk information can be executed by the following steps:
- Assigning an initial risk value to each property information reflecting the risk how strong the component and/or system is harmed by an exploitation of a vulnerability associated to the property information;
- Generating a risk vector showing for each component property of the component the respective initial risk value depending on the property information;
- Providing one or more of the risk categories;
- Providing a matching matrix indicating which component properties are relevant for the respective risk category;
- Generating for the component a risk information matrix based on the matching matrix with respective initial risk values of the component's risk vector for the relevant component properties of the respective risk category, whereby the initial risk represents the risk information for the specific combination of component property and risk category.

This embodiment represents a process to provide the risk information such that it can be processed automatically with low complexity. The risk information according to this description represents a risk / risk value that shows the risk for a dedicated component property of the component in respect to a given risk category. The risk information may represent a risk is a form as presented above. Hence the risk information represents the risk for the combination of component property and risk category.

According to a further embodiment the joint risk information for the risk category is generated based on one or more of the risk information associated to the risk category by one or more of the following rules:
- Selecting the highest value of all risk information associated to the risk category;
- Forming an average value based on all risk information associated to the risk category;
- Selecting the median value of all risk information associated to the risk category;
- Setting a start value and increasing or decreasing the start value based on the risk information associated to the risk category.

By this embodiment the joint risk information can be generated in a low complex but effective way. In addition, one of the rules can be selected to address specific needs such as showing the highest risk or giving a fair average value for the risk.

In addition, for determining the joint risk information it can also be determined whether a component receives the risk category of the zone the component is part of, or whether the component receives own risk categories with different risk values. As an example, a component that is in a zone with low exposure value due to an isolated network and physical protection.

However, the specific component has an external communication path that increases the component's specific risk of being attacked.

The invention can also make use of thread intelligence information in various steps of the method steps that can improve the capability to rate whether for vulnerability, active exploitation in other systems is already possible due to availability of exploits, or has already been practically observed in the field.

The method can be realized as a computer-implemented method.

The invention relates also to a security device for initiating a security action for a component of an industrial system, whereby the security action reduces or completely mitigates a vulnerability or a weak configuration of the component and/or of the industrial system, comprising:
- First device for providing a respective property information for one or several component properties of the component;
- Second Device for providing a risk information for a dedicated combination of the component property and risk category,
   whereby the risk information provides a risk of the property information of the component property in respect to the risk category;
- Third device for determining a joint risk information for the risk category by generating an risk value based on one or more of the risk information associated to the risk category;
- Forth device for determining a component-based risk score based on the respective joint risk information of the several risk categories;
- Fifth device for initiating the security action if the component-based risk score indicates a required action.

In an embodiment of the security device, it covers a sixth device that is designed for carry out any of the method steps.

The embodiments of the security device show the same advantages as the corresponding method steps. The security device and its first to six devices may be realized in software, hardware, firmware or in a combination of those. The individual device may cover a processor that can read and execute instructions representing the steps of the invention. A memory and optional input and/or output units may be connected to each other and/or to the processor by a data and/or instruction bus. The instruction, e.g. as micro code or in a programming language, may be stored on the memory.

The invention further discloses a computer program, comprising instructions which, when the program is executed by a computer, cause the computer to carry out the method steps as described above.

This embodiment shows the same advantageous as describe with previous embodiment.

Finally, the invention asl covers a computer-readable storage medium comprising instructions which, when executed by a computer, cause the computer to carry out the method steps as described above.

This embodiment shows the same advantageous as describe with previous embodiment.

The invention and its embodiments are described by help of figures:
- Figure 1: Production line with various components;
- Figure 2: Workflow for generating a component-based risk score;

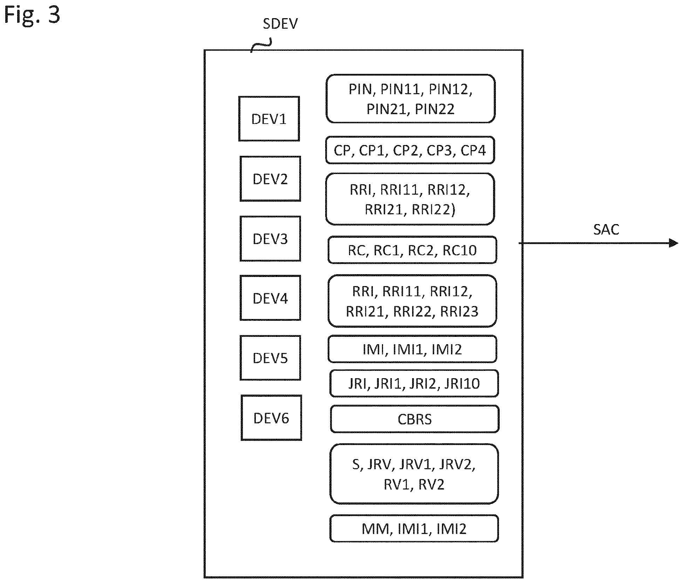

- Figure 3: Security device implementing and executing the invention;

Elements with identical function are marked with an identical label.

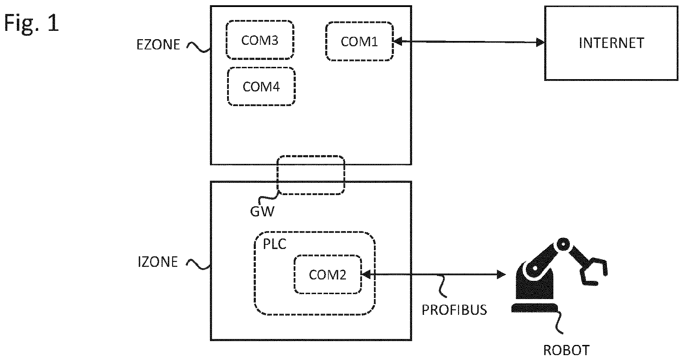

Figure 1 shows an exemplary production line (=system) including an edge zone EZONE, an internal zone IZONE, a robot ROBOT and an interface to an internet zone INTERNET.

The edge zone shows in example 3 components COM1, COM3, COM4. A description of the first component COM1 shows that the first component is an edge device that is connected to public internet zone, is located in a edge zone and filters incoming requests to be forwarded to the third and forth components COM3, COM4 depending on a type of the incoming request. The first component runs on an UNIX operating system, and supports request types HTTP (HTTP-HyperText Transfer Protocol) and FTP (FTP-File Transfer Protocol), only.

The internal zone covers a component PLC (PLC - Programmable Logic Controller) that contains the second component COM2. A description of the second component COM2 defines that the second component is a control application inside the controller PLC for controlling a robot. It is located in the secured internal zone for critical components such as for a production line. The second component communicates via PROFIBUS protocol PROFIBUS with the robot hardware ROBOT. It runs on UNIX. A component GW works as a gateway with firewall to connect both edge and internal zones.

In general, a component can be an individual component or a zone that groups one or more individual components. The first and second components in example are individual components. The invention can be applied to individual components and to zones. If not described in a different way the examples use the term component as individual component.

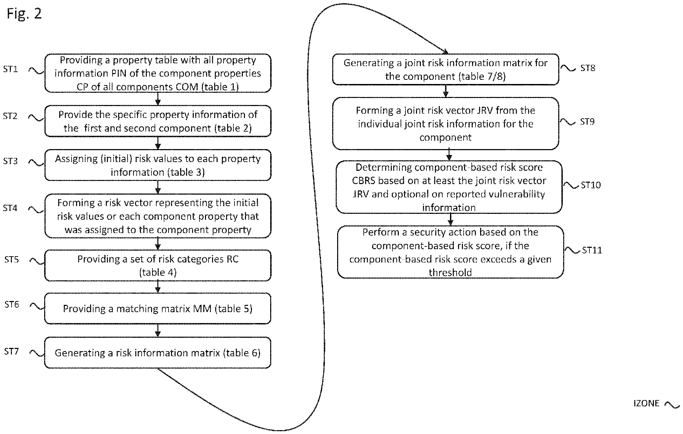

The step "Providing a risk information for a dedicated combination of the component property and risk category, whereby the risk information provides a risk of the property information of the component property in respect to the risk category" will be described by an exemplary implementation according to the 2^{nd} to 7^{th} steps of Fig. 2. The invention is not limited to this specific exemplary implementation.

Turning to Figure 2, an example is shown how to determine a component-based risk score CBRS based on the first and second components by a flow-diagram. In a first step (ST1) respective property information PIN for the component properties CP of the two components need to be provided. In order to simplify this provision for various components a property table is created that contains for all components the component properties. This property table can be based on an analysis of the respective description of all components. In addition, or as an alternative solution the table can be a result of scanning such as network scanning and/or security scans with suitable tools that determine a topology of the actual system, scans on the respective component or interfaces, e.g. to determine the actual configuration and the properties of the components.

**Table 1: Overview of property information PIN of the component properties CP**

| Component Property Sign | Component Property description | Property information PIN | Property information - description |
|---|---|---|---|
| CP1 | Type | PIN11 | Zone |
| | | PIN12 | Network |
| | | PIN13 | OS (Operating System) |
| | | PIN14 | APP (Application) |
| | | PIN15 | Container |
| CP2 | Function | PIN21 | Monitoring process |
| | | PIN22 | Control software |
| | | PIN23 | Safety hardware |
| | | PIN24 | Gateway software |
| CP3 | Location | PIN31 | External zone |
| | | PIN32 | Edge zone |
| | | PIN33 | Internal zone |

The component properties define specific properties of each component such as type CP1 of component that indicates the concrete realization of the component. The function CP2 reflects which task is solved by the respective component, such as a monitoring, a control, a safety or a gateway functionality. Finally in this example there is a location information of the component describing in which environment the component is located, such as the external zone, the edge zone or the internal zone. For the two components the respective property information is set as shown in Table 2. As shown in Fig. 2 the 2^{nd} step ST2 performs the provision of the specific property information of the first and second component.

**Table 2: Assignment of property information**

| Component | Property information PIN |
|---|---|
| COM1 | PIN12, PIN24, PIN32 |
| COM2 | PIN14, PIN22, PIN33 |

The first component is an edge device, connecting two zones/networks. Hence the Property information for type is network PIN12. The property information of the function of the first component is gateway software PIN24. The indicator for location of the first component is edge zone PIN32. The second component is a software application controlling the robot. Hence the indicator for type is APP PIN14. The indicator of the function of the second component is control software PIN22. The indicator for location of the second component is internal zone PIN33.

An initial risk value is assigned to each property information, see 3^{rd} step ST3 in Fig. 2. This initial risk value indicates the risk that is expected with the dedicated property information. The risk value shows a range from 0.0 to 1.0, whereby a low value reflects a low risk to the component and/or system in case of an exploited vulnerability, whereas a high value shows a high risk that the exploited vulnerability harm the component or the system. This can be done manually or automatically. In order to perform an automatic assignment known vulnerability reports can be taken into account and the more reports are found for a component property information the higher the risk can be. In addition, the risk can also depend on an analysis whether a malfunction of the component will have low impact to the system or high impact such as a shutdown of the system. Table 3 is based on Table 1. One property information per component property has to be selected. In case a individual property information of a component doesn't exactly match with the given property information description in Table 3, one of them shall be selected, e.g,. the one that matches best with the individual property information.

**Table 3: Overview of property information PIN of the component properties CP with initial risk values**

| Component Property Sign | Component Property description | Property information PIN | Property information - description | Initial risk value |
|---|---|---|---|---|
| CP1 | Type | PIN11 | Zone | 0.7 |
| | | PIN12 | Network | 0.3 |
| | | PIN13 | OS (Operating System) | 0.6 |
| | | PIN14 | APP (Application) | 0.5 |
| | | PIN15 | Container | 0.6 |
| CP2 | Function | PIN21 | Monitoring process | 0.1 |
| | | PIN22 | Control software | 0.8 |
| | | PIN23 | Safety hardware | 1.0 |
| | | PIN24 | Gateway software | 0.7 |
| CP3 | Location | PIN31 | External zone | 0.2 |
| | | PIN32 | Edge zone | 0.7 |
| | | PIN33 | Internal zone | 1.0 |

As shown in a 4^{th} step ST4 of Fig. 2, the risk vector is generated representing the initial risk values or each component property that was assigned to the component property. By this assignment the first component shows a first risk vector RV1 that covers the initial risk values (=risk values) for each component property that was assigned to the component property. The first risk vector RV1 is set to RV1(CP1; CP2; CP3) = {0.3; 0.7; 0.7}. A second risk vector RV2 for the second component can be derived as RV2(CP1; CP2; CP3) = {0.5; 0.8; 1.0}. The vulnerability vector describes the risk of individual component properties of the component. The initial risk values can be used as permanent risk values in Table 3 or may be adapted in case a vulnerability regarding a specific component property shows an increased exploitation activity. In this case the (initial) risk value of the affected property information can be increased to reflect the increased threat situation. In contrast if there is no incident reported that may affect another component property for a given time frame the (initial) risk value of another component property / property information may be reduced.

In a next step, the respective risk vectors of the first and second components are matched with several risk categories RC1, RC2. The risk category shows the risk for a given security context. The risk categories are provided as shown in a fifth step ST5 of Fig. 2. The risk for the risk category depends on the selected component - in particular to the risk values that are assigned to at least some of the specific component properties. It can happen that specific component properties have no influence on a given risk category. Table 4 shows various risk categories for individual components and zone.

**Table 4: Risk category RC**

| Abbreviation | Description / Meaning |
|---|---|
| RC1 | Exposure for a zone that groups one or more individual components |
| RC2 | Exposure for an individual component |
| RC3 | Security impact of a zone that groups one or more individual components |
| RC4 | Security impact of an individual component |
| RC5 | System impact of a zone that groups one or more individual components |
| RC6 | System impact of an individual component |
| RC7 | Security impact on confidentiality of a zone that groups one or more individual components |
| RC8 | Security impact on confidentiality of an individual component |
| RC9 | Security impact on integrity of a zone that groups one or more individual components |
| RC10 | Security impact on integrity of an individual component |
| RC11 | Security impact on availability of a zone that groups one or more individual components |
| RC12 | Security impact on availability of an individual component |
| RC13 | Exploitation estimate / Exploitability for a zone |
| RC14 | Exploitation estimate / Exploitability for an individual component |

The terminology used by the risk categories are commonly used in the area of security risk analysis, e.g. see [1].

For matching the first risk vector of the first component with the risk category a matching matrix MM is used that indicates which first risk vector elements shall be used for the respective risk category, see sixth step ST6 of Fig. 2. Table 5 shows the matching matrix for the individual component, whereby a value 0 means that the dedicated component property and hence the associated risk value shows no influence in respect to the the risk category. In contract a value 1 shows that the respective risk value of the dedicated component property shall be considered for determining a risk information RRI for a given risk category.

**Table 5: Matching matrix MM for the individual component based on the component property**

| Risk category | CP1 | CP2 | CP3 |
|---|---|---|---|
| RC1 | 0 | 0 | 0 |
| RC2 | 0 | 0 | 1 |
| RC3 | 0 | 0 | 0 |
| RC4 | 1 | 0 | 1 |
| RC5 | 0 | 0 | 0 |
| RC6 | 0 | 1 | 1 |
| RC7 | 0 | 0 | 0 |
| RC8 | 1 | 0 | 1 |
| RC9 | 0 | 0 | 0 |
| RC10 | 1 | 0 | 1 |
| RC11 | 0 | 0 | 0 |
| RC12 | 1 | 0 | 1 |
| RC13 | 0 | 0 | 0 |
| RC14 | 1 | 0 | 0 |

For example, the risk category RC8, representing "Security impact on confidentiality of an individual asset" depends on the risk value of the component properties type and location. According to a seventh step ST7 of Fig. 2, applying the first risk vector of the first component to the matching matrix, the matching matrix is transformed to the risk information matrix as shown in Table 6. Hereby, combination of risk categories and of component properties that have no correlation with each other are labeled as NA. Alternatively they could be set to 0 showing that the given combination of risk category and of component property has no relevance or influence to the risk of the component.

**Table 6: Risk information matrix for the first component**

| Risk category | CP1 | CP2 | CP3 |
|---|---|---|---|
| RC1 | NA | NA | NA |
| RC2 | NA | NA | RV1(CP3)=0.7 |
| RC3 | NA | NA | NA |
| RC4 | RV1(CP1)=0.3 | NA | RV1(CP3)=0.7 |
| RC5 | NA | NA | NA |
| RC6 | NA | RV1(CP2)=0.7 | RV1(CP3)=0.7 |
| RC7 | NA | NA | NA |
| RC8 | RV1(CP1)=0.3 | NA | RV1(CP3)=0.7 |
| RC9 | NA | NA | NA |
| RC10 | RV1(CP1)=0.3 | NA | RV1(CP3)=0.7 |
| RC11 | NA | NA | NA |
| RC12 | RV1(CP1)=0.3 | NA | RV1(CP3)=0.7 |
| RC13 | NA | NA | NA |
| RC14 | RV1(CP1)=0.3 | NA | NA |

The risk value for a combination of risk category and component property is called risk information. For example, the risk information RRI12 for risk category RA1 and component property CP2 is RRI12 = 0. For a combination of risk category RA2 and component property CP3 the risk information RRI23 = 0.7.

In a following step the joint risk information JRI1 for each risk category is determined, as presented in a eight step ST8 of Fig. 2. Various metrics can be used to determine the joint risk information based on the individual risk information of a dedicated risk category such as calculating a mean value, selecting the highest value from the relevant risk information or selecting the median of all relevant risk information. In Table 7 that is based on Table 6 the respective join risk information is calculated based on a mean value.

**Table 7: Joint risk information matrix for the first component**

| Risk category | CP1 | CP2 | CP3 | JRI1, JRV1 |
|---|---|---|---|---|
| RA1 | NA | NA | NA | 0 |
| RA2 | NA | NA | RV1(CP3)=0.7 | 0.7 |
| RA3 | NA | NA | NA | 0 |
| RA4 | RV1(CP1)=0.3 | NA | RV1(CP3)=0.7 | 0.5 |
| RA5 | NA | NA | NA | 0 |
| RA6 | NA | RV1(CP2)=0.7 | RV1(CP3)=0.7 | 0.7 |
| RA7 | NA | NA | NA | 0 |
| RA8 | RV1(CP1)=0.3 | NA | RV1(CP3)=0.7 | 0.5 |
| RA9 | NA | NA | NA | 0 |
| RA10 | RV1(CP1)=0.3 | NA | RV1(CP3)=0.7 | 0.5 |
| RA11 | NA | NA | NA | 0 |
| RA12 | RV1(CP1)=0.3 | NA | RV1(CP3)=0.7 | 0.5 |
| RA13 | NA | NA | NA | 0 |
| RA14 | RV1(CP1)=0.3 | NA | NA | 0.5 |

By this a first joint risk vector JRV1 can be formed from the individual first joint risk information resulting in JRV1 = {0; 0.7; 0; 0.5; 0; 0.7; 0; 0.5; 0; 0.5; 0; 0.5; 0; 0.5}, as shown in a ninth step ST9 of Fig.2,.

The security categories taken into account for the first and second component showed risk categories for individual components and zone. To reduce complexity only the risk categories that are relevant to the individual component may be taken into account for generating the respective joint risk information or joint risk vector. Hence the first joint risk vector JRV1 could be simplified to JRV1 = {0.7; 0.5; 0.7; 0.5; 0.5; 0.5; 0.5}.

In an alternative implementation for the generation of the joint risk information a start value S is provided that may reflect an expected risk value for the risk category, e.g. based on a number of previously received vulnerability information for the component. The more vulnerability information are received the higher the start value is set to reflect a higher risk that the component is harmed in case a vulnerability is exploited in the risk category. In this example the start value is set to 0.5, reflecting a medium risk. The start value can be chosen differently for each selected risk category. In the risk category RC10 the risk information for first component property CP1 is 0.3. Hence the start value is reduced, e.g. by a fixed value or by a value of the risk information. In this example the joint risk information JRI10 = S- 0.3 = 0.2; the third component property CP3 for the risk category is 0.7. The joint risk information JRI10 is increased as the risk of 0.7 is a medium to high risk, Hence the joint risk information JRI10 = JRO10 + 0.7 = 0.9 finally. The start value can be adjusted dynamically in case new vulnerability information get available targeting the component.

For the second component the joint risk information matrix can be determined in an analog way resulting in Table 8.

**Table 8: Joint risk information matrix for the second component**

| Risk category | CP1 | CP2 | CP3 | JRI2, JRV2 |
|---|---|---|---|---|
| RA1 | NA | NA | NA | 0 |
| RA2 | NA | NA | RV2(CP3)=1.0 | 1.0 |
| RA3 | NA | NA | NA | 0 |
| RA4 | RV2(CP1)=0.5 | NA | RV2(CP3)=1.0 | 0.75 |
| RA5 | NA | NA | NA | 0 |
| RA6 | NA | RV2(CP2)=0.8 | RV2(CP3)=1.0 | 0.9 |
| RA7 | NA | NA | NA | 0 |
| RA8 | RV2(CP1)=0.5 | NA | RV2(CP3)=1.0 | 0.75 |
| RA9 | NA | NA | NA | 0 |
| RA10 | RV2(CP1)=0.5 | NA | RV2(CP3)=1.0 | 0.75 |
| RA11 | NA | NA | NA | 0 |
| RA12 | RV2(CP1)=0.5 | NA | RV2(CP3)=1.0 | 0.75 |
| RA13 | NA | NA | NA | 0 |
| RA14 | RV2(CP1)=0.5 | NA | NA | 0.5 |

By this a second joint risk vector JRV2 can be formed from the individual second joint risk information resulting in JRV2 = {0; 1.0; 0; 0.75; 0; 0.9; 0; 0.75; 0; 0.75; 0; 0.75; 0; 0.75}.

Both the first and second joint risk vectors show the influence of the respective component to the risk categories.

In order to determine a component-based risk score CBRS, as shown in a tenth step ST10 of Fig.2, the respective joint risk vector is used to determine the component-based risk score. In one alternative solution the joint risk vector is generated based on the joint risk vector. For example, the element of the joint risk vector with the highest value is taken as the value for the component-based risk score. Alternatively, the median value of the elements of the joint risk vector or an average value of all elements of the joint risk vector is calculated. In another alternative solution a reported vulnerability information that relates to a vulnerability of the component or at least to one of the property information of the component, e.g. as reported by the CVSS standard, is fed with the joint risk vector to a risk calculation matrix to generate the component-based risk score CBRS. The risk calculation matrix matches the elements of the joint risk vector with information given in the reported vulnerability information. The concrete procedure for using the risk calculation matrix is known to a person skilled in the art, e.g. see [1].

The component-based risk score CBRS indicates the risk that a vulnerability of a component, when exploited, results in a lower of higher damage to the component and/or system. Hence the component-based risk score is analyzed, e.g. by a threshold and if the threshold is exceeded a security action regarding the vulnerability is executed e.g. such as a updating a software by a patch or changing configuration to reduce availability of an individual component such as closing unused communication ports. In case the component-based risk score stays below the threshold the actual risk that a vulnerability within the component may lead to a significant damage of the component and/or system is rated low. In this case no security action is required at present.

Besides analyzing one reported vulnerability information the component-based risk score CBRS can also be generated for several reported vulnerability information. In this case the component-based risk score shows the risk how the several reported vulnerability information effect the security of the component and/or system. Probably two individual reported vulnerability information, analyzed individually, may show that each individual one results in a low risk to harm the component and/or system. However, both reported vulnerability information together could result in a high risk to harm the component and/or system. Hence the component-based risk score covering several reported risk information exceeds a threshold and a security action is performed. The person skilled in the art knows, e.g. from [1], how to generate the component-based risk score for several reported vulnerability information.

Based on the component-based risk score CBRS and optional together with one or several reported vulnerability information the security action SAC can be initiated, see eleventh step ST11 of Fig.2, in example for the case that the component-based risk score CBRS exceeds a threshold. The security action can an activation of a concrete action such a updating the component by a patch, closing or stopping unused functionalities of the component such as unused services or unused communication ports or sending a signal to an entity inside or outside the industrial system for activating actions outside the component. These security actions can also refer to modifications to physical measures, for example to access control policies, re-positioning of security cameras, activation or repositioning of detections sensors, activating of alarming mechanisms and/or temporary automatic disabling of system parts or components.

According to Table 3 for each component property one property information of a number of options per component property has to be selected. In the following an additional or alternative component property is described that allows multiple selections within the one component property resulting in one initial risk value.

**Table 9: Overview of property information PIN of the component properties CP with initial risk values for multiple selection**

| Component Property Sign | Component Property description | Property information PIN | Property information - description | deduction risk value | |
|---|---|---|---|---|---|
| | | | Is/does the component... | YES | NO |
| CP4 | Capability | PIN41 | part of security monitoring? | 0.1 | 0.0 |
| | | PIN42 | patched? | 0.2 | 0.0 |
| | | PIN43 | updated with latest malware protection? | 0.1 | 0.0 |
| | | PIN44 | require authentication? | 0.3 | 0.0 |
| | | PIN45 | hardened? | 0.2 | 0.0 |

The property information PIN45 "Is the component hardened?" means that security settings are applied and unnecessary functionality deactivated, see also [4]. The more property information are valid (=YES in Table 9) for a specific component the less the component property "capability" is vulnerable. A possible way to determine an initial risk value for the component property "capability" is by reducing a risk start value of 1.0, indicating highest risk, by each deduction risk value where the property information is valid for a component.

For example, the first component result in the following property information for the component property "capability":
Is/does the first component...
- part of security monitoring? YES
- patched? NO
- updated with latest malware protection? NO
- require authentication? YES
- hardened? YES

The initial risk value IRV is determined as IRV = 1.0 - 0.1 - 0.3 - 0.2 = 0.4. In the determination results in a value outside a given range such as 0.0 - 1.0 the IRV can be set such that is represents a valid value. This initial risk value can then be used in an analog way to the description of other initial risk values with Tables 6-8.

### List of Reference

[1] Maidl et al., System-specific risk rating for software vulnerabilities in industrial automation systems, 2021 IEEE international Symposium on Software Reliability Engineering Workshop (ISSREW), 2021
[2] Common Vulnerabilities and Exposures, https://en.wikipedia.org/wiki/Common Vulnerabilities and Exposures
[3] Common Vulnerability Scoring System, https://en.wikipedia.org/wiki/Common Vulnerability Scoring System
[4] Härten (Computer), https://de.wikipedia.orq/wiki/H%C3%A4rten (Computer)

## Claims

1. Method for initiating a security action (SAC) for a component (COM) of an industrial system (ISY), whereby the security action (SAC) reduces or completely mitigates a vulnerability or a weak configuration of the component (COM) and/or of the industrial system (ISY),
comprising:
- Providing a respective property information (PIN11, PIN12, PIN21, PIN22) for one or several component properties (CP, CP1, CP2) of the component (COM);
- Providing a risk information (RRI, RRI11, RRI12, RRI21, RRI22) for a dedicated combination of the component property (CP1, CP2) and risk category (RC, RC1, RC2),
whereby the risk information (RRI11, RRI12, RRI21, RRI22) provides a risk of the property information (IMI1, IMI2) of the component property (CP1., CP2) in respect to the risk category (RC1, RC2);
- Determining a joint risk information (JRI) for the risk category (RC1) by generating an risk value based on one or more of the risk information (RRI) associated to the risk category (RC1);
- Determining a component-based risk score (CBRS) based on the respective joint risk information (JRI1, JRI2) of the several risk categories (RC1, RC2);
- Initiating the security action if the component-based risk score (CBRS) indicates a required action.

2. Method according to claim 1,
whereby the component is realized by an individual component or by a zone.

3. Method according to any preceding claims,
whereby the component property (CP1, CP2) describes a property of the component such as:
- Type of component, in particular represented by property information such as an embedded component, network component, security component, operating system component, software application or a container component;
- Functionality of component, in particular represented by property information such as controlling a process, monitoring a status of a process, controlling one or several components in the industrial system, running offline or real-time, being a primary or secondary component, or executing an essential or safety function;
- Location of component, in particular represented by property information showing a physical or geographical location within a production facility or plant, a remote location in respect to the industrial system;
- Topology of component, in particular represented by property information such as the component's level within the Purdue model;
- Data the component is working with, in particular represented by property information for the data that shows specific requirements in terms of confidentiality, integrity and/or availability.

4. Method according to any preceding claims,
whereby the respective property information (PIN1, PIN2) is provided by a description of the component and/or by scanning of one or more components of the industrial system, in particular by a network scanning and/or security scanning.

5. Method according to any preceding claims,
whereby at least parts of the respective property information (PIN1, PIN2) is set up during the set up of the industrial system and/or is updated on either in given time intervals or after vulnerability information was received that relates to a respective component (COM) covering the respective property information (PIN1, PIN2).

6. Method according to any preceding claims,
whereby the provision of the risk information (RRI11, RRI12, RRI21, RRI22) can be executed by the following steps:
- Assigning an initial risk value to each property information (PIN1, PIN2) reflecting the risk how strong the component and/or system is harmed by an exploitation of a vulnerability associated to the property information (PIN1, PIN2);
- Generating a risk vector (RV, RV1) showing for each component property (CP) of the component (COM1) the respective initial risk value depending on the property information (PIN);
- Providing one or more of the risk categories (RC);
- Providing a matching matrix indicating which component properties (CP) are relevant for the respective risk category (RC);
- Generating for the component (COM) a risk information matrix based on the matching matrix with respective initial risk values of the component's (COM1) risk vector (RV1) for the relevant component properties (CP) of the respective risk category (RC), whereby the initial risk represents the risk information (RRI) for the specific combination of component property (CP) and risk category (RC).

7. Method according to any preceding claims,
whereby the joint risk information (JRI) for the risk category (RC1) is generated based on one or more of the risk information (RRI) associated to the risk category (RC1) by one or more of the following rules:
- Selecting the highest value of all risk information (RRI) associated to the risk category (RC1);
- Forming an average value based on all risk information (RRI) associated to the risk category (RC1);
- Selecting the median value of all risk information (RRI) associated to the risk category (RC1);
- Setting a start value (S) and increasing or decreasing the start value (S) based on the risk information (RRI) associated to the risk category (RC1).

8. Method according to any preceding claims,
whereby the risk category (RC) describes at least one of the following security contexts:
- Exposure for a zone that groups one or more individual components;
- Exposure for an individual component;
- Security impact of a zone that groups one or more individual components;
- Security impact of an individual component;
- Exploitation estimate / Exploitability for a zone;
- Exploitation estimate / Exploitability for an individual component.

9. Method according to any preceding claims,
whereby the risk category (RC) describes at least one of the following security contexts:
- Exposure for a zone that groups one or more individual components;
- Exposure for an individual component;
- Security impact of a zone that groups one or more individual components;
- Security impact of an individual component;
- System impact of a zone that groups one or more individual components;
- System impact of an individual component;
- Security impact on confidentiality of a zone that groups one or more individual components;
- Security impact on confidentiality of an individual component;
- Security impact on integrity of a zone that groups one or more individual components;
- Security impact on integrity of an individual component;
Security impact on availability of a zone that groups one or more individual components;
- Security impact on availability of an individual component;
- Exploitation estimate / Exploitability for a zone;
- Exploitation estimate / Exploitability for an individual component.

10. Method according to any preceding claims,
whereby the component property (CP4) describes several capabilities of the component such as:
- Is the component under security monitoring?
- Is the component patched or patchable?
- Is the component updated with a latest malware protection?
- Does the component require authentication?
- Is the component hardened?
whereby the initial risk value is determined by a start risk value that is reduced by a dedicated deduced risk value for each capability that is available within the component.

11. Security device (SDEV) for initiating a security action (SAC) for a component (COM) of an industrial system (ISY), whereby the security action (SAC) reduces or completely mitigates a vulnerability or a weak configuration of the component (COM) and/or of the industrial system (ISY),
comprising:
- First device (DEV1) for providing a respective property information (PIN1, PIN2) for one or several component properties (CP, CP1, CP2) of the component (COM);
- Second Device (DEV2) for providing a risk information (RRI, RRI11, RRI12, RRI21, RRI22) for a dedicated combination of the component property (CP1, CP2) and risk category (RC, RC1, RC2),
whereby the risk information (RRI11, RRI12, RRI21, RRI22) provides a risk of the property information (IMI1, IMI2) of the component property (CP1., CP2) in respect to the risk category (RC1, RC2);
- Third device (DEV3) for determining a joint risk information (JRI) for the risk category (RC1) by generating an risk value based on one or more of the risk information (RRI) associated to the risk category (RC1);
- Forth device for (DEV34) for determining a component-based risk score (CBRS) based on the respective joint risk information (JRI1, JRI2) of the several risk categories (RC1, RC2);
- Fifth device (DEV5) for initiating the security action (SAC) if the component-based risk score (CBRS) indicates a required action.

12. Security device (SDEV) according to claim 11,
whereby the security device (SDEV) covers a sixth device (DEV6) that is designed for carry out any steps of claims 2 to 10.

13. Computer program, comprising instructions which, when the program is executed by a computer, cause the computer to carry out the method of any claim 1 to 10.

14. A computer-readable storage medium comprising instructions which, when executed by a computer, cause the computer to carry out the method of any claim 1 to 10.
